Europäisches Patentamt

European Patent Office

Office européen des brevets

(11) Veröffentlichungsnummer : **0 204 859**
**B1**

(12) EUROPÄISCHE PATENTSCHRIFT

(45) Veröffentlichungstag der Patentschrift :
20.09.89

(51) Int. Cl.⁴ : **G 11 B  5/84**, B 23 B  1/00

(21) Anmeldenummer : 85107310.6

(22) Anmeldetag : 13.06.85

(54) Verfahren und Vorrichtung zur Oberflächenbearbeitung von Substratplatten für Magnetspeicherplatten.

(43) Veröffentlichungstag der Anmeldung :
17.12.86 Patentblatt 86/51

(45) Bekanntmachung des Hinweises auf die Patenterteilung : 20.09.89 Patentblatt 89/38

(84) Benannte Vertragsstaaten :
AT BE CH FR GB IT LI NL SE

(56) Entgegenhaltungen :
DE–B– 2 410 823
DE–C– 735 878
US–A– 4 240 311
PATENT ABSTRACTS OF JAPAN, Band 6, Nr. 100 (P-121)[978], 9. Juni 1982; & JP - A - 57 33439 (FUJITSU K.K.) 23.02.1982
PATENT ABSTRACTS OF JAPAN, Band 6, Nr. 145 (P-132)[1023], 4. August 1982; & JP - A - 57 64331 (NIPPON DENKI K.K.) 19.04.1982

(73) Patentinhaber : BASF Aktiengesellschaft
Carl-Bosch-Strasse 38
D-6700 Ludwigshafen (DE)

(72) Erfinder : Fehrenbach, Hubert
Albert-Schweitzer-Strasse 63
D-7640 Kehl (DE)
Erfinder : Koch, Volker, Dr.
Am Hipperling 3
D-6719 Battenberg (DE)
Erfinder : Boese, Bernhard
Richard-Wagner-Strasse 26
D-7640 Kehl (DE)

**Beschreibung**

Die Erfindung betrifft eine Vorrichtung zur Herstellung einer Substratplatte für eine Magnetspeicherplatte, mit einer für den Aufzeichnungsbereich vorgesehenen Ringfläche zwischen dem Außenrand und dem durch eine zentrale Öffnung gebildeten Innenrand. Diese Vorrichtung zur Herstellung der Substratplatte besteht aus einem antreibbaren Spannfutter, das mit einer konzentrisch angeordnete und an eine Unterdruckquelle angeschlossene Ringnuten aufweisenden Frontscheibe zum Aufspannen der zu bearbeitenden Substratplatte ausgestattet ist, und aus einem sowohl längs der Spannfutterachse als auch senkrecht dazu bewegbaren Werkzeugschlitten für das spanende Werkzeug.

An die Ebenheit und Oberflächengüte von Magnetspeicherplatten, bei denen sich die Magnetköpfe während der Rotation der Platte für den Schreib-/Lesebetrieb im Abstand von weniger als 1 μm fliegend über der Oberfläche befinden, werden äußerst hohe Anforderungen gestellt. Diese Eigenschaften, von denen das Flugverhalten der Magnetköpfe abhängt, werden wesentlich vom Träger der Magnetschicht, den Substratplatten, bestimmt. Ein störungsfreier Schreib-/Lesebetrieb ist nur bei ruhigem Fliegen des Magnetkopfes gewährleistet.

Die für solche Magnetspeicherplatten vorgesehenen Substratplatten werden nach einer Vorbearbeitung auf einer hochpräzisen Feindrehbank mit einem Diamantwerkzeug plangedreht. Sie sind dabei auf einer Frontscheibe des Spannfutters mittels Unterdruck aufgespannt. Es kommt häufig vor, daß die Platten nach dem Abnehmen von der Frontscheibe infolge innerer Spannungen eine leichte Tellerförmigkeit in der für das Flugverhalten der Magnetköpfe ausschlaggebenden Größenordnung annehmen. Messungen haben ergeben, daß die dadurch hervorgerufene Überhöhung oder Vertiefung des Aufzeichnungsbereiches gegenüber dem Plattenrand bei einem Plattendurchmesser zwischen 100 und 150 mm etwa 2 bis 5 μm beträgt.

Es hat sich gezeigt, daß die elektromagnetischen Werte, insbesondere der Abtastpegel, auf der konvex gekrümmten Seite einer solchen Platte besser sind als auf der konkav gekrümmten Seite. Außerdem hat sich gezeigt, daß das Pegelniveau höher ist als bei beidseitig vollkommen ebenen Platten.

Aus der JP-A-5 764 331 sind Magnetspeicherplatten bekannt, die zur Verbesserung der Flachheit der Oberfläche und Verminderung des Massenträgheitsmomentes zum Außenrand hin verjüngt sind. Die vorstehend aufgezeigte Verbesserung der elektromagnetischen Werte der Platten werden bei dieser Plattenform jedoch nicht erreicht.

Des weiteren ist in der JP-A-5 733 439 ein Bearbeitungsverfahren für Substratplatten beschrieben, bei dem die Platte auf eine Frontscheibe aufgespannt wird, die konzentrisch angeordnete und an eine Unterdruckquelle angeschlossene Ringnuten aufweist. Die Bearbeitung der Plattenoberfläche wird mit einem sowohl axial als auch radial verfahrbaren spanenden Werkzeug vorgenommen. Eine konvexe Wölbung der für den Aufzeichnungsbereich der Platte vorgesehenen Ringfläche kann dabei nicht erhalten werden.

Demgemäß bestand die Aufgabe, eine Vorrichtung zur Herstellung einer Substratplatte für eine Magnetspeicherplatte zu entwickeln, bei der die elektromagnetischen Werte auf beiden Plattenseiten gleich gut sind, und eine konkave Krümmung einer Seite vermieden wird.

Die Lösung der Aufgabe besteht in einer Vorrichtung zur Herstellung einer Substratplatte für eine Magnetspeicherplatte der eingangs beschriebenen Art, bei der die Ringfläche auf beiden Plattenseiten konvex gewölbt ist.

Bei dieser Vorrichtung zur Herstellung der Substratplatte sind die durch die Ringnuten entstandenen Stege zur Mitte der durch sie gebildeten ringförmigen Stützfläche für die Substratplatte hin mit geringerer Breite bemessen, so daß infolge der dadurch abnehmenden Stützkräfte eine konkav gewölbte Verformung der Substratplatte auftritt.

Die Erfindung ist anhand in der Zeichnung dargestellter Ausführungsbeispiele nachfolgend erläutert.

Es zeigen :

Figur 1 eine Substratplatte in diametrischen Querschnitt.

Figur 2 das nach der Erfindung gestaltete Spannfutter einer Feindrehbank mit der aufgespannten Substratplatte und dem Drehwerkzeug im Längsschnitt.

Figur 3 den mit einem Stellelement ausgestatteten Halter für das Drehwerkzeug im Längsschnitt.

Figur 4 ein mit einem axial wirksamen Stellelement verbundenes Spannfutter.

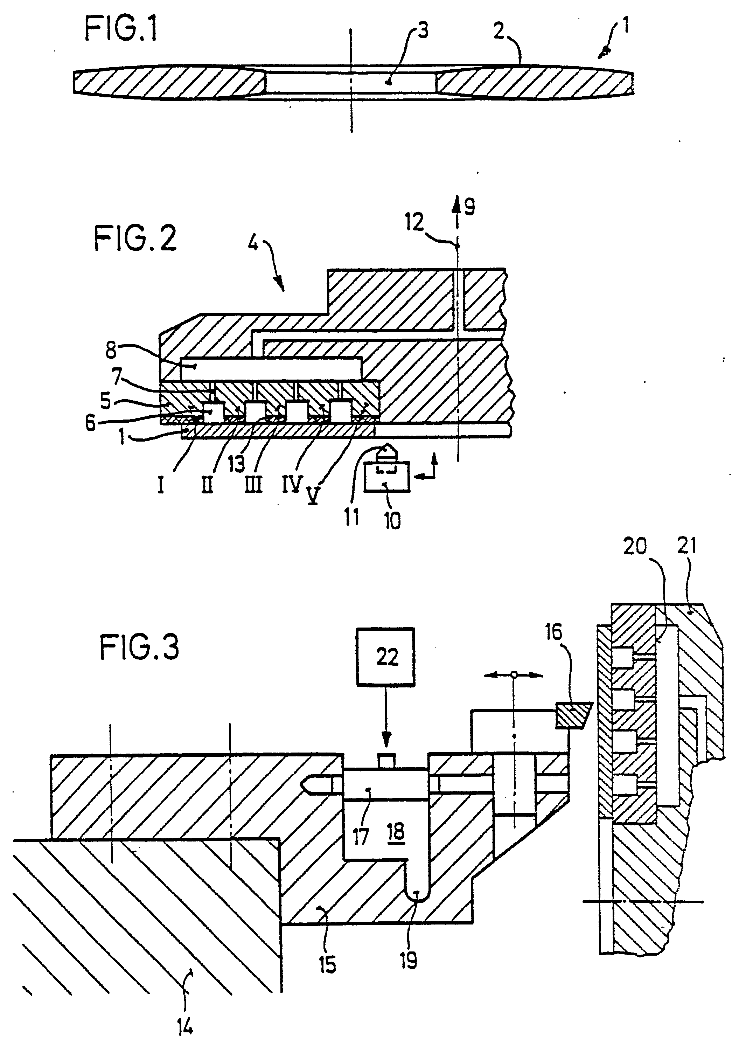

Durch die Oberflächenbearbeitung soll eine Substratplatte 1 hergestellt werden, deren für den Aufzeichnungsbereich vorgesehene Ringfläche 2 eine zentrale Öffnung 3, wie in Figur 1 zu sehen ist, auf beiden Seiten der Platte konvex gewölbt ist.

Hierzu ist eine für die Bearbeitung geeignete Feindrehmaschine mit einem Spannfutter 4 (Figur 2) ausgestattet, welches eine Frontscheibe 5 aus Aluminium aufweist. Die Frontscheibe ist mit konzentrisch angeordneten Ringnuten 6 versehen, die über Bohrungen 7 und einem Sammelkanal 8 mit einer Unterdruckquelle 9 in Verbindung stehen. Vor dem Spannfutter ist üblicherweise — und in der Zeichnung daher nur angedeutet — ein Werkzeugschlitten 10 mit dem spanenden Werkzeug 11 angeordnet, der für die der gewünschten Oberflächenform der zu bearbeitenden Platte entsprechenden Vorschubbewegung sowohl längs der Spannfutterachse 12 als auch senkrecht dazu bewegbar gelagert ist.

Die durch die Ringnuten 6 entstandenen Stege 13, die eine ringförmige Stützfläche für die durch einen Unterdruck in den Nuten von etwa 400 Torr gehaltene Substratplatte bilden, sind zur Mitte der Stützfläche hin zunehmend zurückgesetzt; im Beispiel nach Figur 2 Steg II· und IV um 2 μm und Steg III um 4 μm, so daß die aufgespannte Substratplatte ein leicht konkaves Spannprofil annimmt. In dieser Lage wird die Substratplatte durch eine rein radiale Vorschubbewegung des Werkzeugschlittens 10 eben abgedreht. Durch anschließendes Aufheben des Unterdrucks zum Abnehmen der elastisch verformten Platte von der Frontscheibe 5 entspannt diese, so daß sich die abgedrehte Ringfläche 2 konvex wölbt. Die Bearbeitung der rückseitigen Ringfläche erfolgt in gleicher Weise, jedoch auf einem zweiten Spannfutter, bei dem wegen der auszugleichenden Wölbung der Auflagefläche die Stege der Frontscheibe doppelt so stark zurückgesetzt sind als bei der ersten Frontscheibe.

Das konkave Spannprofil der zur spanenden Bearbeitung aufgespannten Substratplatte kann auch dadurch erreicht werden, daß die durch die Ringnuten 6 entstandenen Stege 13 aus elastischem Material bestehen und zur Mitte der durch sie gebildeten ringförmigen Stützfläche hin nicht zurückgesetzt sind, sondern in ihrer Breite abnehmen, beispielsweise beträgt die Breite von Steg I und V 5 mm, von Steg II und IV 4 mm und von Steg III 3 mm. Durch die abnehmende Materialstärke werden die Stege unter der Auflagekraft der durch Unterdruck aufgespannten Substratplatte zur Mitte der Stützfläche hin zunehmend elastisch zusammengedrückt, so daß die Platte konkav verformt wird. Die weitere Bearbeitung erfolgt dann wie bereits oben beschrieben, wobei die unterschiedlichen Wölbungen der Platte auf der ersten und zweiten Bearbeitungsseite durch unterschiedliche Unterdrucke erzeugt werden, beispielsweise 300 Torr für die erste und 400 Torr für die zweite Seite für eine Wölbungshöhe von 4 μm.

Die konvexe Wölbung der Ringfläche 2 kann in weiterer Ausgestaltung der Oberflächenbearbeitung auch dadurch erhalten werden, daß die Substratplatte 1 auf eine ebene Frontscheibe 20 des Spannfutters 21 aufgespannt wird und das spanende Werkzeug in einer der gewünschten Wölbung entsprechenden Vorschubbewegung über die rotierende Platte geführt wird. Wie in Figur 3 zu sehen, ist der auf dem Werkzeugschlitten 14 befestigte Halter 15 des Werkzeugs 16 für die dazu notwendige achsiale Bewegungskomponente mit einem Stellelement 17 versehen, das in eine dem Werkzeug tragenden Teil des Halters eine gewisse elastische Beweglichkeit verleihende Aussparung 18 eingefügt ist. Die für den jeweiligen Anwendungsfall erforderliche Beweglichkeit kann durch eine entsprechend zu bemessende Vertiefung 19 beeinflußt werden. Als Stellelement eignet sich besonders ein Quarzkristall, der beim Anlegen einer elektrischen Spannung deformiert wird, so daß die der gewünschten Vorschubbewegung entsprechende Längenänderung des Kristalls mit Hilfe einer Spannungssteuerung 22 im Mikrometerbereich exakt und reproduzierbar vorgenommen werden kann. Selbstverständlich sind auch andere Stelleinrichtungen, beispielsweise elektromagnetische, pneumatische oder hydraulische Stellglieder einsetzbar, sofern sie im genannten Größenbereich steuerbar sind.

Diese Bearbeitungsmethode gestattet es, daß beide Seiten einer Substratplatte auf einem Spannfutter bearbeitet werden können, da die für die zweite Bearbeitungsseite doppelt so stark auszuführende Wölbung mittels der Spannungssteuerung 22 eingestellt werden kann. Hierbei ist ein besonderer Vorteil, daß die Tiefenpräparation der Stege entfällt, und die Auflagefläche der Frontscheibe völlig eben sein kann.

Eine weitere Möglichkeit zur Herstellung von beidseitig konvex gekrümmten Oberflächen der Substratplatte besteht darin, daß diese eben aufgespannt wird und das spanende Werkzeug radial und geradlinig über die Oberfläche geführt wird und das Spannfutter eine auf den Vorschub des Werkzeugs abgestimmte achsiale Verschiebung ausführt, so daß ein konvexes Bearbeitungsprofil entsteht. Auch hier ist bei der Bearbeitung der rückseitigen Ringfläche aus den oben beschriebenen Gründen ein doppelt so großer Axialhub erforderlich.

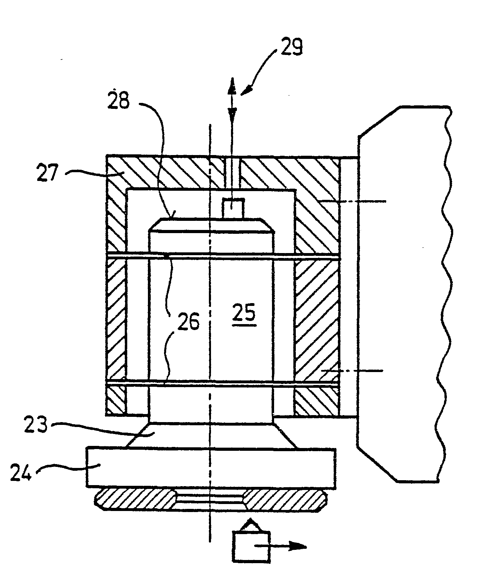

Eine in Figur 4 gezeigte Ausführungsform sieht hierzu vor, daß die Antriebsspindel 23 des Spannfutters 24 und der Antriebsmotor 25 eine Einheit bilden, die mittels zweier Membranen 26 am Maschinengestell 27 befestigt ist. Zur axialen Verschiebung der Einheit ist das Motorgehäuse 28 mit einem steuerbaren Stellelement 29, wie oben für das axial verschiebbare Werkzeug beschrieben, verbunden. Neben einem elektrischen (z. B. piezoelektrischen) oder pneumatischen oder hydraulischen Stellelement, kann auch ein elektromechanischer Stellantrieb, beispielsweise ein Schrittmotor, verwendet werden.

Ist eine luftgelagerte Spindel vorgesehen, so kann deren axiale Verschiebung durch einseitige Veränderung des Luftdruckes im Lagerspalt vorgenommen werden. Luftlagerspindeln stehen im Fachhandel zur Verfügung, so daß auf eine zeichnerische Darstellung verzichtet werden kann. Es ist dann lediglich eine geeignete Luftsteuerung vorzusehen.

## Patentanspruch

Vorrichtung zur Herstellung eine Substratplatte für eine Magnetspeicherplatte, mit einer für den Aufzeichnungsbereich vorgesehenen Ringfläche (2) zwischen dem Außenrand und dem durch eine zentrale Öffnung (3) gebildeten Innenrand, bestehend aus einem antreibbaren Spannfutter (4), das mit einer konzentrisch angeordnete und an eine Unterdruckquelle (9) angeschlossene Ringnuten (6) aufweisenden Frontscheibe (5) zum Aufspannen der zu bearbeitenden Substratplatte (1) ausgestattet ist, und aus einem sowohl längs der Spannfutterachse (12) als auch senkrecht dazu bewegbaren Werkzeugschlitten (10) für das spanende Werkzeug (11), dadurch gekennzeichnet, daß die durch die Ringnuten (6) entstandenen Stege (13) zur Mitte der durch sie gebildeten ringförmigen Stützfläche für die Substratplatte hin mit geringerer Breite bemessen sind, so daß infolge der dadurch abnehmenden Stützkräfte eine konkav gewölbte Verformung der Substratplatte auftritt.

**Claim**

Apparatus for producing a magnetic memory disk substrate plate having an annular surface (2) provided for the storage area between the outer edge and the inner edge formed by a central aperture (3), consisting of a drivable chuck (4) which is equipped with a front disk (5), having concentrically arranged annular grooves (6) connected to a vacuum source (9), for clamping the substrate plate (1) to be machined, and of a tool slide (10) for the cutting tool (11), which tool slide can be moved both along the chuck axis (12) and perpendicularly thereto, wherein the webs (13) formed by the annular grooves (6) are dimensioned with smaller widths toward the center of the annular support surface for the substrate plate formed by the webs, so that, as a result of the consequently decreasing support forces, a concavely arched deformation of the substrate plate appears.

**Revendication**

Dispositif pour la fabrication d'une plaque de base pour un disque de mémoire magnétique, qui présente une surface annulaire (2), prévue pour la zone d'enregistrement, entre le bord externe et le bord intérieur formé par une ouverture centrale (3), constitué par un plateau de serrage (4) entraînable qui est équipé d'un disque frontal (5) disposé concentriquement et présentant des gorges annulaires (6) raccordées à une source de dépression (9), pour assurer le serrage de la plaque de base (1) à usiner, et par un chariot (10), support de l'outil d'usinage (11), déplaçable aussi bien parallèlement à l'axe (12) du plateau de serrage que perpendiculairement à celui-ci, caractérisé par le fait que les nervures (13) résultant des gorges annulaires (6) présentent une largeur qui va en diminuant en allant vers l'axe de la surface d'appui annulaire pour la plaque de base, formée par ces nervures, de sorte que la plaque de base prend la forme d'une voûte concave.

FIG.1

FIG.2

FIG.3

29

28

27

26    25

23

24

FIG.4